# EUROPÄISCHE PATENTSCHRIFT

(11) **EP 0 827 451 B1**
(45) Veröffentlichungstag und Bekanntmachung des Hinweises auf die Patenterteilung: **15.12.1999**
(21) Anmeldenummer: 96916108.2
(22) Anmeldetag: 17.05.1996
(51) Int. Cl.: B32B 23/08, A41D 31/00, A62B 17/00, A62D 5/00

(54) **LAMINAT ZUM RÜCKHALT VON ORGANISCHEN DÄMPFEN, AEROSOLEN UND BIOLOGISCHEN WIRKSTOFFEN**
LAMINATE FOR RETAINING ORGANIC VAPOURS, AEROSOLS AND BIOLOGICAL ACTIVE SUBSTANCES
STRATIFIE POUR RETENIR LES VAPEURS ORGANIQUES, LES AEROSOLS ET LES SUBSTANCES ACTIVES BIOLOGIQUES

(30) Priorität: 22.05.1995 DE 19518683
(43) Veröffentlichungstag der Anmeldung: 11.03.1998
(73) Patentinhaber: Akzo Nobel N.V., 6824 BM Arnhem (NL)
(72) Erfinder: BAURMEISTER, Ulrich, D-42115 Wuppertal (DE); ZENGEL, Hans-Georg, D-63839 Kleinwallstadt (DE)
(74) Vertreter: Fett, Günter
(86) Internationale Anmeldenummer: EP9602119
(87) Internationale Veröffentlichungsnummer: WO9637365

(56) Entgegenhaltungen:
- EP-A- 0 472 499
- WO-A-90/10424
- WO-A-95/33007
- US-A- 3 993 840
- US-A- 4 559 139
- US-A- 5 024 594
- DATABASE WPI Week 9112 Derwent Publications Ltd., London, GB; AN 91-084446 XP002013056 & JP,A,03 030 944 (TOYOBO KK)

## Beschreibung

Die Erfindung betrifft ein Laminat zum Rückhalt von organischen Dämpfen, Aerosolen und biologischen Wirkstoffen mit mindestens drei Schichten, wobei mindestens eine Schicht als Sperrschicht ausgebildet ist, und die Verwendung desselben.

Laminate werden zu unterschiedlichen technischen Zwecken eingesetzt. So beschreibt das US-Patent 4,559,139 ein wasserdurchlässiges Laminat, das im Bereich der reversen Osmose, beispielsweise der Meerwasser-Entsalzung, verwendet werden kann. Eine mikroporöse Schicht u.a. aus Cellulose-Acetat wird dabei einseitig mit einer Schicht aus sauerstoffsperrendem Polyvinylalkohol versehen. Eine wasserdichte und gasundurchlässige Folie beschreibt das US-Patent 3,993,840. Ein Harz aus Pullulan wird dabei zumindest einseitig mit einem gasdichten, thermoplastischen Film z.B. aus Polyester laminiert, wodurch ein transparentes Laminat zugänglich ist.

Seit Jahren wird versucht, Laminate zum Beispiel zur Verwendung von Bekleidungsstücken oder als Wände von Zelten, schnell aufzubauenden Notunterkünften oder Unterständen herzustellen, welche gegenüber giftigen organischen Dämpfen und Aerosolen undurchlässig sind.

Unter organischen Dämpfen ist ein gasförmiger Aggregatzustand eines Stoffs zu verstehen, in den dieser durch Verdampfen, Verdunsten oder Sublimation gelangt, wobei z.B. Tetrachlorkohlenstoff- oder Toluol-Verbindungen oder deren Zersetzungsprodukte etc. als Beispiel für organische Dämpfe aufgeführt sind, welche unter Umständen giftig sein können.

Unter biologischen Wirkstoffen können Viren, Bakterien, Eukaryontenzellen oder Plasmide etc. zu verstehen sein, welche das Vermögen besitzen, zumindest auf der Haut des Benutzers hautirritierend, wenn nicht gar stark entzündend für den gesamten menschlichen Organismus, zu wirken.

Aerosole sind Kolloidsysteme aus Gasen (z.B. Luft) mit darin verteilten, kleinen festen oder flüssigen Teilchen (Schwebstoffen) von etwa 10-7 bis 10-3 cm Durchmesser zu verstehen. Damit sind gleichfalls dispergierte Komponenten z.B. Stäube oder Rauche umfaßt, aber auch, falls sie flüssig sind, Nebel. Diese Aerosolteilchen können elektrisch durch dipolare oder unipolare Diffusion von Klein-Ionen aufgeladen, durch Photoeffekt oder Photodissoziation entstehen oder durch Einwirkung von elektrischen Entladungen erzeugte Teilchen sein. In Form von toxischen oder pathogenen Schwebstoffen können z.B. fein verteilte Salze von organischen giftigen Verbindungen wie Phenolverbindungen, Cyanate, Cyanide, Alkaloidverbindungen, Phosphatide, etc., Rauche von Industrieabgasen, saure Nebel von Feuerungen und Autoabgasen, mit giftigen organischen Verbindungen beladener Kohlenstaub eingeschlossen sein, welche bei Berührung mit der Haut des Benutzers entzündlich oder u.U. tödlich wirken.

Bei den herkömmlichen Laminaten zeigt sich, daß die mit einem z.B. im US-Patent 5 017 424 offenbarten Verbundlaminat, welches eine wasserdichte wasserdampfdurchlässige Außenschicht, eine Innenschicht und eine Zwischenschicht als Absorberschicht aus Aktivkohle umfaßt, versehenen Bekleidungsstücke zwar einen hinreichenden Schutz gegenüber organischen Dämpfen zumindest in der Anfangszeit ihrer Exposition bieten, jedoch tritt der Nachteil auf, daß nach Sättigung der Adsorberschicht mit den adsorbierten organischen Dämpfen die Bekleidungsstücke für organische Dämpfe wieder im zunehmenden Maße durchlässig wird. Zudem sind diese Bekleidungsstücke insofern nachteilig, als die Wiederverwendbarkeit der Bekleidungstücke durch die eingeschränkte Regenerierbarkeit bzw. mangelnde Waschunempfindlichkeit der Adsorberschicht stark eingeschränkt sind. Dies gilt auch für die in den US-Patenten 4,872,220 und 5,024,594 beschriebenen Verbundmaterialien, bei denen jeweils auf der Innenseite einer Schutzschicht gegenüber organischen Dämpfen eine weitere Absorberschicht z.B. aus Aktivkohle angeordnet ist, weil offensichtlich die dort beschriebenen Schutzschichten ebenfalls keine Langzeitwirkung aufweisen. Dies gilt auch für den in dem US-Patent 5,024,594 beschriebenen Laminataufbau, bei dem eine permselektive Membran auf Cellulose-Basis mit einer beidseitigen Beschichtung z.B. aus Neopren oder Silikon-Kautschuk versehen ist.

Weil zudem die Aktivkohleschicht eine bis zu 0,35 cm Schichtdicke aufweisen kann, wird der Tragekomfort der Bekleidungsstücke durch ihr hohes Eigengewicht und mangelnde Flexibilität eingeschränkt.

Auch die mit einer Gummischicht oder wasserdampfundurchlässigen Schicht oder Schichten versehenen Bekleidungsstücke, i.e. US-Patent 4 981 738, erfüllen nicht die an ein Bekleidungsstück gestellten Anforderung, wie hoher Tragekomfort, geringes Eigengewicht, hinreichende Flexibilität. Vielmehr weisen gerade die mit einer Gummischicht oder wasserdampfundurchlässigen Schicht versehenen Bekleidungsstücke zwar eine ausgezeichnete Undurchlässigkeit für giftige organische Dämpfe auf, jedoch führt ein über mehrere Stunden erfolgtes Tragen zu einer hohen Feuchtigkeit zwischen der Haut des Benutzers und der Gummischicht des Bekleidungsstücks, da die Gummischicht einen Wasserdampftransport der von der Haut des Benutzers abgegebenen Feuchtigkeit nach außen verhindert, so daß Hautirritationen und eine hohe Anfälligkeit für Pilz- und Bakterieninfektionen die Folgen sind. Darüber hinaus ist die Flexibilität der mit Gummi versehenen Bekleidungsstücke in kälterer klimatischer Umgebung stark eingeschränkt, da die Elastizität von Gummi in Kälte sich verringert und die Gummischicht zur Sprödigkeit neigt, so dag zudem Undichtigkeiten der Bekleidungsstücke bedingt durch Risse oder Spalten gegenüber organischen Dämpfen und Aerosolen auftreten können.

Auch die in EP A 0 391 660 offenbarten Bekleidungsstücke, welche eine hydrophobe wasserdampfdurchlässige mikroporöse Membran mit einer PTFE-Vliesstofflage aufweisen, sind nur eingeschränkt regenerierbar und waschbar. Auch wenn diese Ausführungsform mit einer adsorptiven Innenlage versehen ist, welche vorzugsweise eine Aktivkohleschicht ist, zeigt sie wohl eine anfängliche gute Adsorption von organischen Dämpfen, hingegen tritt hierbei nach Sättigung der Aktivkohleschicht rasch eine Durchlässigkeit für Giftstoffe nach Erschöpfung ihrer Adsorptionskapazität ein.

Aufgabe der vorliegenden Erfindung ist es, die o.g. Nachteile des Stands der Technik zu beseitigen. Darüber hinaus ist es wünschenswert, wenn das Laminat nicht nur eine anfängliche sondern eine dauerhafte Undurchlässigkeit gegenüber organischen Dämpfen bietet. Da das Laminat als Ausgangsmaterial für Bekleidungsstücke verwendbar sein soll, und diese häufig stundenlang getragen werden sollen, wäre ein angenehmes Tragegefühl erwünscht, so dag die von der Haut des Benutzers abgegebene Feuchtigkeit ohne weiteres nach außen gelangt, hingegen den Durchtritt von Wasser bei einer Exposition des Bekleidungsstücks in Regen verhindert.

Da die Bekleidungsstücke nicht nur als Schutzkleidung bei Unfällen z.B. bei chemischen Herstellungs- und Verarbeitungsbetrieben, in Forschungslaboratorien, bei Bränden der Rettungseinsätzen getragen werden sollen sondern es auch zweckdienlich ist und der Vorsorge dient, das Laminat in Arbeitskleidung z.B. auch als chirurgische Schutzkleidung gegen virale Infektion und organische Lösungsmittel zu verwenden, ist es erforderlich, dag das Laminat sich darüber hinaus durch ein geringes Gewicht, geringe Herstellungskosten und eine hinreichende Wiederverwendbarkeit, Waschbarkeit und Sterilisationsvermögen auszeichnet.

Die Aufgabe wird gelöst durch den Hauptanspruch und die nebengeordneten Ansprüche. Die Unteransprüche betreffen bevorzugte Ausführungsformen und Weiterentwicklungen der Erfindung.

Die Erfindung bezieht sich auf ein wasserdampfdurchlässiges und flüssigkeitssperrendes Laminat zum Rückhalt von organischen Dämpfen, Aerosolen und biologischen Wirkstoffen mit mindestens drei Schichten, wobei mindestens eine Schicht eine ganzflächig von Polymeren auf Cellulosegrundlage ausgebildete Sperrschicht ist und mindestens die beiden übrigen der mindestens drei Schichten als flüssigkeitssperrende und wasserdampfdurchlässige Trennschichten auf jeder Seite der Sperrschicht angeordnet sind und welches dadurch gekennzeichnet ist, dag die Sperrschicht einen Porenfüller aufweist.

Unter Laminate sind mehrschichtige Formstücke (Schichtstoffe) mit mindestens einer Trägerschicht zu verstehen, wobei die Schichten mindestens abschnittsweise miteinander verbunden sind. Hierbei kann das Laminat auch eine Trägerschicht umfassen, welche dem erfindungsgemäßen Laminat die gewünschte mechanische Festigkeit wie Zugfestigkeit, Weiterreißfestigkeit oder Reißfestigkeit verleiht.

Auch ist hierunter dasjenige Formstück zu verstehen, das nur eine Trägerschicht aufweist, welches aber derartig mit Polymeren auf Cellulosegrundlage beschichtet oder getränkt ist, dag mindestens eine Seite der Trägerschicht ganzflächig von diesen Polymeren bedeckt ist, wobei diese ganzflächige Bedeckung dann eine der erfindungsgemäßen Trennschichten darstellt. Ganzflächig bedeutet, daß die gesamte Oberfläche mindestens einer Seite einer Schicht, z.B. der Trägerschicht, aus diesen Polymeren besteht, so daß für den Durchgang von organischen Dämpfen, Aerosolen und biologischen Wirkstoffen geeignete sogenannte Fehlstellen auf der Oberfläche z.B. der Trägerschicht nicht vorhanden sind.

Auch ist unter Laminat im Sinne der vorliegenden Erfindung dasjenige Formstück zu verstehen, bei dem die Sperrschicht mindestens eine selektiv permeable als Membran enthält.

Unter Membran wird auch ein Film ohne Fehlstellen verstanden, welcher in einem getrennten Verfahren herstellbar ist.

Die Sperrschicht des erfindungsgemäßen Laminats kann auch eine mikroporöse Filtrationsmembran umfassen, deren Poren mit den Polymeren auf Cellulosegrundlage zumindest teilweise gefüllt sind. Wesentlich hierbei ist, dag die Poren in flächenmäßiger Erstreckung der Membranebene untereinander über Kanäle in Verbindung stehen und auch die Kanäle mit diesen Polymeren gefüllt sind und/oder zumindest eine Oberfläche der Membran mit diesen Polymeren ganzflächig beschichtet sind und die Poren nur dieser Oberfläche zumindest teilweise mit diesen Polymeren gefüllt sind. Typische Vertreter für mikroporöse Filtrationsmembranen sind hydrophobe Polymere wie Polyolefine z.B. Polypropylen, Polyethylen, Polysulfone, Polyethersulfone, oder hydrophile Polymere auf Grundlage von Polyamid, Polyetheramid, Polyetherester sowie Copolymere derselben. Im Falle von hydrophoben Polymeren und einseitiger Beschichtung wirkt die unbeschichtete Oberfläche als Trennschicht.

Unter Sperrschicht im Sinne der vorliegenden Erfindung wird jede Schicht verstanden, die zumindest überwiegend organische Dämpfe, Aerosole sowie biologische Wirkstoffe zurückhält und zusätzlich wasserdampfdurchlässig ist. Sie kann zusätzlich als Trennschicht ausgebildet sein und insofern selektiv permeabel wirken.

Unter Trennschicht im Sinne der vorliegenden Erfindung wird jede Schicht verstanden, welche den Durchtritt von flüssigem Wasser zumindest überwiegend zurückhält. Diese Schicht ist derart ausgebildet, daß sie wasserdampfdurchlässig ist.

Es ist nunmehr zu beobachten, daß das erfindungsgemäße Laminat für organische Dämpfe, welche giftig sein können, undurchlässig ist, wobei z.B. Tetrachlormethan als Testsubstanz verwendet wird. So können aufgrund der z.B. in Bekleidungsstücken erfolgten Verwendung des erfindungsgemäßen Laminats, bei dem beispielsweise mindestens eine Schicht als Sperrschicht vorhanden ist, organische Dämpfe nicht mehr durch die Bekleidung von außen nach innen permeieren, so daß kein Kontakt der giftigen Dämpfe mit der Hautoberfläche des Benutzers stattfindet.

Mindestens eine Sperrschicht kann dadurch herstellbar sein, daß eine Schicht ein textiles Flächengebilde wie Vlies, Filz, Wirkware oder Gewebe ist und dieses mit Polymeren auf Cellulosegrundlage getränkt und/oder beschichtet wird. Ebenfalls kann die Sperrschicht als Membran ausgestaltet sein, welche man mit Polymeren auf Cellulosegrundlage herstellen kann.

Die Sperrschicht bzw. Membran kann eine mindestens annähernd isotrope Porenverteilung aufweisen und/oder doppellagig ausgebildet sein.

In einer weiteren vorteilhaften Ausführungsform weist das erfindungsgemäße Laminat eine hohe Wasserdichtheit auf, wobei die Sperrschicht eine Ultrafiltrationsrate von gleich oder weniger als 1 ml/std. x m2 mmHg, vorzugsweise weniger als 0,1 ml/std. x m2 mmHg, aufweist. Die Ultrafiltrationsrate des erfindungsgemäßen Laminats, die in der Literatur auch als "Hydraulic Permeability" bezeichnet wird, wurde nach der von E. Klein u.a., Journal of Membrane Science, 2 (1977) 349-364 beschriebenen Meßmethode ermittelt. Auch zeigt sich, daß die Ultrafiltrationsrate durch Verminderung von Porenfüllern wie Glycerin beim Herstellungsprozeß der Membran von Vorteil ist. Zur Erhöhung der Wasserdichtigkeit kann daher der Glycerinzuschlag auf 0,1 bis 15 Gew.%, vorzugsweise auf 1 Gew.%, bezogen auf das Gewicht der Membran (ohne Glycerin), gesenkt werden.

Es ist erforderlich, daß mindestens eine Sperrschicht mindestens eine Trennschicht auf jeder Seite aufweist. Durch diese Anordnung wird u.a. das Auswaschen des Porenfüllers wie Glycerin, PEG (Polyethylenglykol) und PVP (Polyvinylpyrrolidon), Abkömmlinge oder Mischungen derselben aus der Polymere auf Cellulosegrundlage enthaltenden Sperrschicht wirkungsvoll verhindert, da die Polymere auf Copolyetherestergrundlage enthaltenden Trennschichten für Glycerin, PVP und PEG undurchlässig sind. Von Vorteil ist es, wenn die Polymere auf Cellulosegrundlage einen Zuschlag an Glycerin, PVP, PEG, Abkömmlingen oder Mischungen derselben unter 20 Gew.%, vorzugsweise von 0,1 bis 15 Gew.%, bezogen auf das Gewicht der zu Spinn-, Beschichtungs-, Tränkungs-, Formmassen oder Membran etc. verarbeiteten Polymere auf Cellulosegrundlage, z.B. auf das Gewicht der Membran, aufweisen. Unter dem Gewicht der zu Spinn-, Beschichtungs-, Tränkungs-, Formmassen oder Membran verarbeiteten Polymere auf Cellulosegrundlage wird im Sinne der vorliegenden Erfindung hierbei das Gewicht der zu Spinn-, Beschichtungs-, Tränkungs-, Formmassen oder Membran etc. verarbeiteten Polymere auf Cellulosegrundlage ohne Porenfüller verstanden.

Das Auswaschen dieser Porenfüller wird auch verhindert, wenn PEG, PVP, Abkömmlinge oder Mischungen derselben mit einer Molmasse größer als 10 000 g/mol verwendet werden. Ganz bevorzugt ist eine Molmasse von PEG, PVP, Abkömmlinge oder Mischungen derselben von 60 000 bis 120 000 g/mol. Ebenso ist es von Vorzug, wenn PVP, PEG, Abkömmlinge oder Mischungen derselben vernetzt sind, um das Auswaschen oder das sogenannte Ausschwitzen dieser Porenfüller im Gebrauch zu vermeiden, und damit die physikalischen, textilen Eigenschaften des erfindungsgemäßen Laminats wie Haftung, Quellverhalten, Ultrafiltration, etc. zu steuern und im Gebrauch zu erhalten.

Zudem ist es überaus vorteilhaft, wenn das erfindungsgemäße Laminat eine hydrostatische Druckfestigkeit von gleich oder größer 1,3802 x 105 Pa (20 psi) aufweist, welche nach FTMS 191A TM 5512 gemessen wird.

Ebenso kann das erfindungsgemäße Laminat derart ausgestaltet sein, daß die Sperrschicht als Klebeschicht ausgebildet ist. Die Klebeschicht besteht hierbei aus Polymere auf Cellulosegrundlage aufweisenden Klebern, welche organische Dämpfe, Aerosole und biologische Wirkstoffe zurückzuhalten vermögen.

Die Trennschicht in dem erfindungsgemäßen Laminat kann dadurch hergestellt sein, daß sie als Membran Polymere auf Polyetherestergrundlage, vorzugsweise Copolyetherestergrundlage, Polymere auf Polypropylengrundlage und/oder Polymeren auf Polyetheramidgrundlage enthält. Zudem kann auch eine, vorzugsweise mikroporöse, Membran verwendet werden, die Polymere wie Polyolefine, Polyethylen-Polypropylen-Copolymere, Polyethylen, Terephthalate, Polycaprolactam, Polyvinylidenfluorid, Polybutylenterephthalat, Polyestercopolymere und Polytetrafluorethylen umfaßt. Es ist auch möglich, die einseitig mit Polymeren auf Cellulosegrundlage beschichtete mikroporöse Membran oder Trägerschicht auf der Gegenseite mit als Trennschicht wirkenden Polymeren zu beschichten, wobei eine zweite Trennschicht auf der Seite des cellulosischen Polymers den erfindungsgemäßen Laminataufbau komplettiert.

Durch Tränkung, Lackierung oder Beschichtung mit Polymeren auf Polyetherestergrundlage, vorzugsweise Copolyetherestergrundlage, Polymeren auf Polypropylengrundlage und/oder Polymeren auf Polyetheramidgrundlage mindestens einer Schicht, z.B. der Sperrschicht, des erfindungsgemäßen Laminats kann man gleichfalls eine Trennschicht zur Abtrennung von flüssigem Wasser herstellen. Vorzugsweise eignen sich hierfür eine oder mehrere Schichten aus textilem Flächengebilde wie Vlies, Filz, Wirkware, Schaumstoff und/oder Gewebe.

Auch wird das unerwünschte Eindringen von flüssigem Wasser zusätzlich durch die in einer besonderen Ausführungsform der Erfindung erfolgte Tränkung (=Imprägnierung) oder Beschichtung mindestens der Außenschicht und/oder der Innenschicht mit, vorzugsweise wasserdampfdurchlässigen, Hydrophobiermitteln verhindert, so dag ein Auffüllen des Zwischenraums zwischen Trennschicht und Sperrschicht oder das Auffüllen der Trägerschicht mit Wasser wirkungsvoll verhindert wird. Daher kann das erfindungsgemäße Laminat gleichfalls als Regenschutzbekleidung sowie als Zeltplane oder - wand unter Bedingungen eingesetzt werden kann, die starker Beregnung ausgesetzt sind, letzteres z.B. zur Abschirmung von Chemielagerstätten oder -anlagen etc.. Daher eignet sich das erfindungsgemäße Laminat auch als Abdeckungs- oder Schutzplane für empfindliche vor den o.g. äußeren Einflüssen zu schützende Gerätschaften, Vorrichtungen, Maschinen etc.

In einer erfindungsgemäßen Ausführungsform können die Spinn-, Beschichtungs- bzw. Formmassen zur Herstellung der Sperrschicht bzw. Sperrschichten Polymere auf Cellulosegrundlage umfassen, welche nach dem Cuprammoniumverfahren herstellbar sind. Bei diesem Verfahren wird die Löslichkeit der Cellulose in Kupferoxidammoniak-Lösung ausgenutzt. Aus der Kupferoxidammoniak-Lösung läßt sich Cellulose als Flachmembran wieder ausfällen, in dem man die Lösung durch Spinndüsen in wäßrige saure oder basische Lösung oder einfach warmes Wasser preßt, wodurch sich Flachmembran großer Feinheit (unter dem Warenzeichen Cuprophan eingetragen) gewinnen lassen.

Auch lassen sich Spinn-, Beschichtungs- bzw. Formmassen zur Herstellung der ganzflächigen Sperrschicht aus Polymeren auf Cellulosegrundlage unter Verwendung von Kupfer-Ethylendiamin-Komplex-Lösung, Xanthogenat-Lösung, Trimethylchlorsilan/NH3/Dimethylformamid (DMF)-Lösung, Paraformaldehyd/Dimethylsulfoxid (DMSO)/ N,N-Dimethylacetamid (DMAc)-Lösung, N2O4/Dimethylformamid (DMF)-Lösung, Dimethylsulfoxid (DMSO)-Lösung, LiCl/ Dimethylacetamid (DMAc) oder N-Methylpyrrolidon (NMP)-Lösung, Cellulosecarbamat-Lösung, HCOOH/H3PO4-Lösung oder Polyphosphorsäure-Lösung als Lösungsmittel für Cellulose darstellen.

Ebenso vermag man Spinn-, Beschichtungs- bzw. Formmassen zur Herstellung von Sperrschichten mit Polymeren auf Cellulosegrundlage bereitzustellen, welche unter Verwendung von tert. Aminoxid-Lösung als Lösungsmittel für Cellulose herstellbar sind. Bei diesem Herstellungsverfahren ist es möglich, Polymere auf Cellulosegrundlage für ein Spinn-, Beschichtungs- bzw. Formmasse zu verwenden, welche 4,99 - 25 Gew.% Cellulose, 95 - 50 Gew.% eines tertiären Aminoxids, z.B. N-Methyl-morpholin-N-oxid, gegebenenfalls bis 25 Gew.% Nichtlösungsmittel und bis zu 10 Gew.% andere Polymere jeweils bezogen auf das Gewicht der Form- bzw. Spinnmasse enthält, wobei die Form- bzw. Spinnmasse als Zusatzstoff einzeln oder im Gemisch organische Verbindungen, die wenigstens 4 Kohlenstoffatome und wenigstens zwei konjugierte Doppelbindungen und wenigstens zwei Gruppen in Form von Hydroxyl-und/oder Aminogruppen mit wenigstens einem unsubstituierten Wasserstoffatom besitzen, und/oder Glycerinaldehyd umfaßt.

Die Herstellung dieser Polymere auf Cellulosegrundlage kann dadurch erfolgen, daß die Cellulose und gegebenenfalls ein anderes Polymere in einem tertiären Aminoxid, das einen Zusatz der organischen Verbindung und gegebenenfalls bis zu 25 Gew.% eines Nichtlösungsmittels enthält, bei Temperaturen zwischen 70 und 190°C bis zur Auflösung der Cellulose gerührt wird. Als tertiäre Aminoxide kommen alle diejenigen in Betracht, die Cellulose zu lösen vermögen und die gegenüber Wasser stabil sind. Beispiele hierfür sind Dimethyläthanolaminoxid, Triäthylaminoxid, bestimmte monocyclische N-Methylamin-N-oxide, wie N-Methylmorpholin-N-oxid, N-Methylpiperi-. din-N-oxid, N-Methylhomopiperidin-N-oxid, N-Methylpyrrollidin-N-oxid, sowie andere cyclische Aminoxide, bei denen die Aminoxidgruppe außerhalb des Rings liegt, wie Di-N-methylcyclohexylamin-N-oxid, Dimethylhexylamin-N-oxid etc..

Als organische Verbindungen können Brenzkatechin, Pyrogallol, Gallussäure, Gallussäuremethylester, -äthylester, -propylester, -isopropylester sein, wenn die vier Kohlenstoffatome und die beiden konjugierten Doppelbindungen Teile eines aromatischen Ringsystems z.B. ein Benzolkern sind, wobei die Hydroxyl- und/oder Aminogruppen an benachbarten Kohlenstoffatome gebunden sein können.

Als organische Verbindungen können Hydrochinon, 4(Methylamino)phenolsulfat, N-Cyclohexyl-N' (2-cyanoäthyl)-1,4 Phenylendiamin, N-Cyclohexyl-N'-phenyl-1,4 Phenylendiamin verwendet werden, wenn die vier Kohlenstoffatome und die beiden konjugierten Doppelbindungen Teile eines aromatischen Ringsystems z.B. ein Benzolkern sind, wobei die Hydroxyl- und/oder Aminogruppen an Kohlenstoffatomen 1 und 4 gebunden sein können.

In einer besonderen Ausführungsform wird eine Schicht des erfindungsgemäßen Laminats z.B. eine Gewebeschicht mittels Extrusionsbeschichtung mit Polymeren auf Cellulosegrundlage etc. als Beschichtungsmasse beschichtet. Bei der Extrusionsbeschichtung wird beispielsweise die Beschichtungsmasse, welche Polymere auf Copolyetherestergrundlage, Polypropylengrundlage, Polyurethangrundlage und/oder Polyetheramidgrundlage enthält, als Granulat in einen Extruder gegeben, erhitzt, geschmolzen und durch eine Breitschlitzdüse gepreßt. Die dabei entstehende schmelzflüssige Folie wird unmittelbar nach Verlassen der Breitschlitzdüse auf das z.B. Gewebe der Außenschicht, der Innenschicht und/oder der Zwischenschicht oder Zwischenschichten, welches erwärmt sein kann, mit Hilfe von Walzenpaaren aufgepreßt und geglättet.

Das Rückhalten von organischen Dämpfen, Aerosolen und biologischen Wirkstoffen kann bereits dadurch bewirkt werden, daß man z.B. eine Trennschicht als Trägerschicht mit den Polymeren auf Cellulosegrundlage, welche nach dem Cuprammoniumverfahren herstellbar sind, tränkt. In einer besonderen Ausführungsform ist ebenfalls eine Tränkung oder Lackierung einer oder mehrerer Schichten unter Anwendung von Vakuum oder erhöhten Druck mit den flüssigen bzw. verflüssigbaren Polymeren auf Cellulosegrundlage von Vorteil.

Ist eine mit einem Porenfüller versehene Schicht als vom Benutzer abgewandte Schicht also die Außenschicht z.B. als textiles Gewebe mit Polymeren auf Cellulosegrundlage derart getränkt, beschichtet oder als Membran so laminiert, daß eine ganzflächige Sperrschicht entsteht, ferner die dem Benutzer zugewandte also innenliegende Futterschicht und eine weitere Schicht z.B. als Membran aus Copolyetherester wirkende Trennschicht (unter dem Warenzeichen Sympatex eingetragen) vorhanden, reicht bereits ein Dreischichtlaminat aus, die an die Erfindung gestellten Aufgaben zu erfüllen. Es wird sowohl eine ausreichende Wasserdichtigkeit über die Trennschicht als auch und vor allem eine hinreichende Dichtigkeit über die mit dem Porenfüller versehene Sperrschicht und damit ein Rückhalt gegenüber organischen Dämpfen, Aerosolen und biologischen Wirkstoffen gewährleistet, ohne den Tragekomfort bei Verwendung des Laminats im Bekleidungsstücken nennenswert einzuschränken. Hierbei zeigt sich, daß das erfindungsgemäße Laminat bei unterschiedlichsten klimatischen Bedingungen in Bekleidungsstücken einsetzbar ist, da es ein geringes Gewicht und eine hinreichende Elastizität auch bei tiefen Temperaturen aufweist. Zudem läßt sich kein Luftdurchlaß durch das erfindungsgemäße Laminat nach DIN 53 887 feststellen.

Es ist natürlich auch möglich, das erfindungsgemäße Laminat als Vierschichtlaminat zu verwenden, wobei eine Schicht als für organische Dämpfe undurchlässige Außenschicht mit Polymeren auf Cellulosegrundlage, eine wasserdichte, wasserdampfdurchlässige Membran z.B aus Polymeren auf Copolyetherestergrundlage (unter dem Warenzeichen Sympatex eingetragen) als Zwischenschicht ausgebildet, eine Innenschicht aus Vlies zur Abpolsterung und zur Vermeidung mechanischer Beschädigung der Membran sowie eine thermostabile Futterschicht vorhanden sind.

Im Falle der Verwendung einer oder mehrerer Schichten mit Polymeren auf Cellulosegrundlage ist es vorteilhaft, beim Herstellungsverfahren der Membranen verschiedene Modifikationen z. B. die Oberflächenmodifikation oder Ersetzen von SiO2 als Antiblockierungsmittel durch andere Verbindungen durchzuführen, um eine noch bessere Haftung zwischen den Schichten untereinander zu gewährleisten.

Auch kann die Oberfläche der Schicht zur Verstärkung des Adhäsionsvermögens des Klebers bzw. einer weiteren Schicht oberflächig aktiviert werden z.B. mittels Casing-Verfahrens. Bei dem Casing-Verfahren (cross-linking by activated species of inert gases) kann eine Oberflächenveränderung mittels einer in einer Helium- oder Neon-Atmosphäre durchgeführten Glimmentladung erfolgen, wobei sehr reaktionsfähige Edelgas-Radikale entstehen können, die die Oberfläche der Folie, Membran oder der mit Polymer beschichteten Schicht angreifen und eine Veränderung z.B. Vernetzung einleiten.

Die so behandelten Membran bzw. Schicht etc. kann leicht sonach mit üblichen Klebern an die anderen Schichten geklebt werden, wobei die mit Kleber benetzte Fläche der Membran aufgrund der durch z.B. das Casing-Verfahren verstärkten Bindung zwischen Membran und Kleber gering gehalten werden kann; dadurch wird vorteilhafterweise die zur Wasserdampfdurchlässigkeit von innen nach außen erforderliche Fläche des Bekleidungsstücks nicht nennenswert eingeschränkt. In einer bevorzugten Ausführungsform kommt man jedoch ohne eine Vorbehandlung aus, indem die cellulosische, selektiv permeable Membran mit Polyurethankleber mindestens einseitig mit einem textilen Gewebe oder einer Membran z.B. aus oder mit Polymeren auf Copolyetherestergrundlage (Sympatex, welches als Warenzeichen eingetragen ist) zumindest abschnittsweise, bevorzugt in einem regelmäßigen Punktraster, verklebt ist.

Mit Hilfe von Oberflächenbehandlungsverfahren ist möglich, die Oberfläche mindestens einer Schicht zu hydrophobieren.

Eine Verbesserung der Haftung einer Schicht mit einer Membran z.B. mit Polymeren auf Cellulosegrundlage kann mittels Plasmapolymerisation erreicht werden, wobei die Plasmapolymerisation vorzugsweise zwischen 20 und 80°C durchgeführt wird. Auch kann die Modifikation der Zwischenschicht mittels Plasmapolymerisation unter Erzeugung des Plasmas durch Gleichstrom oder Hochfrequenz-Wechselstrom bzw. durch Mikrowellen bei Drucken z.B. zwischen 0,01 und 1 kPa erfolgen. Die Plasmapolymerisation zeigt bei der Beschichtung der Außenschicht und /oder Innenschicht mit o. g. Polymeren, bei der Beschichtung der Zwischenschicht mit diesen Polymeren, mit Polymeren auf Copolyetherestergrundlage, Polymeren auf cellulosischer Grundlage, welche nach dem tert. Aminoxidverfahren herstellbar sind, oder Polymeren auf Polyetheramidgrundlage, daß eine gleichmäßige Polymermembran, Polymerschicht bzw. -beschichtung gebildet wird, die sich durch eine ausgezeichnete Haftfestigkeit auszeichnet. Hierbei kann die Oberflächeneigenschaft dergestalt geändert werden, daß die Abriebfestigkeit und Kratzfestigkeit, das antistatische Verhalten der Zwischenschicht, Augenschicht und Innenschicht je nach Erfordernis optimiert oder verändert werden.

Auch zeigt sich, dag das erfindungsgemäße Laminat nur eine sehr geringe Torsionssteifheit und Biegesteifheit zeigt, so dag das erfindungsgemäße Laminat bei Verwendung in Bekleidungsstücken ein angenehmes Tragegefühl beim Benutzer hervorruft.

Durch Variation des Zuschlags an Glycerin, PEG, PVP, Abkömmlingen oder Mischungen derselben als Porenfüller in der aus Polymeren auf Cellulosegrundlage hergestellten Sperrschicht z.B. Außenschicht oder Innenschicht kann auch die Wasserdampfdurchlässigkeit je nach Erfordernis verändert und angepaßt werden. Beispielsweise kann der Glycerinzuschlag von 0,1 bis 15 Gew.%, vorzugsweise 1 Gew.%, bezogen auf das Gewicht der Membran (ohne Glycerin), betragen.

Ebenfalls können Schichten des erfindungsgemäßen Laminats, z.B. die Außenschicht und/oder Innenschicht, aus Micro-Spinnfasern auf Polyester-, Polyamid-, Acryl-, Viskose- und/oder Modalfasergrundlage verwendet werden, wobei Spinnfasergarne bis Nm 200 (als Ringgarne) bzw. Nm 100 (Rotorgarne) aus Micro-Spinnfasern im Titerbereich von 0,6 bis 1,3 dtex, vorzugsweise 0,6 bis 0,8 dtex, vorteilhafterweise Verwendung finden.

Zudem ist es möglich, mindestens eine Schicht mit Aramidfasern [Poly (1,4-phenylenterephtalalamid)] herzustellen, welche einen hohen Dehnungswiderstand, eine große Festigkeit und Biegsamkeit aufweist. Auch ist es vorteilhaft, wenigstens eine Schicht mit Polymeren auf Grundlage von einem aromatischen Polyamid mit m-Phenylendiamin und Isophtalsäure herzustellen, so daß das erfindungsgemäße Laminat aufgrund hoher thermischer Beständigkeit als Bekleidungsstücke für Feuerschutzanzüge, Trainings-, Militärschutzkleidung und Verteidigungs- sowie Kampfanzüge, in der Flugzeuginnenausstattung, Filteranlagen für industrielle Abgase, nicht brennbare Abdichtungen, Abtrennungen und Überzüge und so weiter zu verwenden ist.

Darüber hinaus zeigt sich, daß die Bekleidungsstücke mit dem erfindungsgemäßen Laminat chemisch gereinigt werden können, ohne daß eine Durchlässigkeit für organische Dämpfe, Aerosole oder auch gegenüber biologischen Wirkstoffen eintritt.

Aufgrund der Sperrwirkung des erfindungsgemäßen Laminats gegenüber organischen Dämpfen eignet es sich zur Verwendung als Zeitwand oder Abdeckung von empfindlichen Gerätschaften. Ebenso ist der Gebrauch des erfindungsgemäßen Laminats als wasserdichtes, wasserdampfdurchlässiges Bauteil, e.g. seitliche Begrenzung, von Räumlichkeiten, Gebäuden, Zelten, Notunterkünften, Hilfsunterkünften vorteilhaft, uni Mensch, Tier und Geräte Schutz vor giftigen Dämpfen, Aerosolen und biologischen Wirkstoffen als auch vor Wasser oder Regen zu bieten.

Auch ist es möglich, bei Verwendung von Polymeren auf Cellulosegrundlage, die nach dem Cuprammoniumverfahren herstellbar sind, durch Variation in Konzentration und Auswahl der Porenbildner oder Porenfüller, Weichmacher, wie Polyethelenglykole, Polyvinylpyrrolidine, die Haftung, das Quellverhalten, die Wasserdichtigkeit und die verschiedenen physikalischen Textileigenschaften des erfindungsgemäßen Laminats bereits beim Herstellungsprozeß großmaschinell und kostengünstig zu verändern und sonach eine preiswerte Herstellung des erfindungsgemäßen Laminats zu ermöglichen.

In einer weiteren Ausführungsform kann mindestens eine Schicht des erfindungsgemäßen Laminats Polymere auf Copolyetherestergrundlage enthalten, die sich von längerkettigen Polyglykolen, kurzkettigen Glykolen mit 2 bis 4 Kohlenstoffatomen und Dicarbonsäuren ableiten. Vorzugsweise können die Polymere Copolyetherester sind, die aus einer Vielzahl von wiederkehrenden intralinearen langkettigen und kurzkettigen Estereinheiten bestehen, die statistisch über Esterbindungen Kopf an Schwanz verknüpft sind, wobei die langkettigen Estereinheiten der Formel 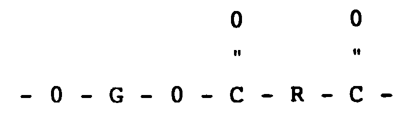 und die kurzkettigen Estereinheiten der Formel 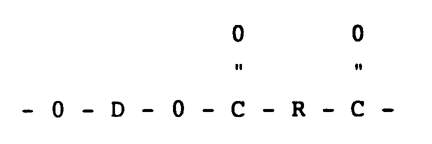 entsprechen, worin G einen zweiwertigen Rest darstellt, der nach der Entfernung von endständigen Hydroxylgruppen aus mindestens einem langkettigen Glykol eines mittleren Molekulargewichts von 600 bis 6 000 und eines Atomverhältnisses von Kohlenstoff zu Sauerstoff zwischen 2,0 und 4,3 zurückbleibt, wobei mindestens 20 Gew.% des langkettigen Glykols ein Atomverhältnis von Kohlenstoff zu Sauerstoff zwischen 2,0 und 2,4 besitzen und 15 bis 50 Gew.% des Copolyetheresters ausmachen, R einen zweiwertigen Rest darstellt, der nach der Entfernung von Carboxylgruppen aus mindestens einer Dicarbonsäure eines Molekulargewichts von weniger als 300 zurückbleibt, und D einen zweiwertigen Rest darstellt, der nach der Entfernung von Hydroxylgruppen aus mindestens einem Diol eines Molekulargewichts von weniger als 250 zurückbleibt, wobei mindestens 80 Mol % der verwendeten Dicarbonsäure aus Terephthalsäure oder ihren esterbildenden Äquivalenten und zumindest 80 Mol % des Diols mit dem kleinen Molekulargewicht aus 1,4-Butandiol oder dessen esterbildenden Äquivalenten bestehen, die Summe der Molprozente der Dicarbonsäure, die keine Terephthalsäure oder deren esterbildenden Äquivalente darstellt, und des Diols mit einem kleinen Molekulargewicht, das kein 1,4-Butandiol oder dessen esterbildenden Äquivalente darstellt, höchstens 20% beträgt und die kurzkettigen Estereinheiten 40 - 80 Gew.% des Copolyetheresters betragen.

Zudem können die Polymere ganz oder teilweise Copolyetherester sein, worin mindestens 70 Mol % der verwendeten Dicarbonsäure 2,6-Naphthalindicarbonsäure oder deren Ester bildenden Äquivalente sind und bei dem mindestens 70 Mol.% des verwendeten Diols mit einem kleinen Molekulargewicht 1,4-Butandiol oder dessen esterbildenden Äquivalente ist und die Summe der Molprozente der Dicarbonsäure, die keine 2,6-Naphthalindicarbonsäure oder deren Ester bildende Äquivalente ist und des Diols mit einem kleinen Molekulargewicht, das kein 1,4-Butandiol oder dessen Ester bildende Äquivalente ist, höchstens 30% beträgt und die Estereinheiten mit kurzen Ketten 35 bis 80 Gew.% des Copolyetheresters ausmachen.

Gleichfalls können die Polymere Copolyetherester sein, worin die aus einer Vielzahl von wiederkehrenden intralinearen langkettigen und kurzkettigen Estereinheiten bestehen, die statistisch über Esterbindungen Kopf an Schwanz verknüpft sind, wobei die langkettigen Estereinheiten der Formel 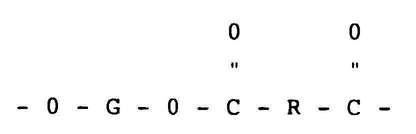 und die kurzkettigen Estereinheiten der Formel 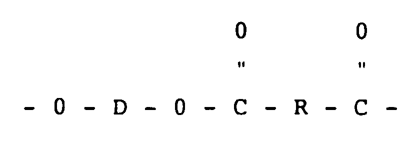 entsprechen, wobei G einen zweiwertigen Rest darstellt, der nach der Entfernung von endständigen Hydroxylgruppen aus mindestens einem langkettigen Glykol eines mittleren Molekulargewichts von 600 bis 4 000 und eines Atomverhältnisses von Kohlenstoff zu Sauerstoff zwischen 2 und 4,3 zurückbleibt, wobei mindestens 20 Gew.% des langkettigen Glykols ein Atomverhältnis von Kohlenstoff zu Sauerstoff zwischen 2,0 und 2,4 besitzen und 15 bis 50 Gew.% des Copolyetheresters ausmachen, R einen zweiwertigen Rest darstellt, der nach der Entfernung von Carboxylgruppen aus mindestens einer Dicarbonsäure eines Molekulargewichts von weniger als 300 zurückbleibt und D einen zweiwertigen Rest darstellt, der nach der Entfernung von Hydroxylgruppen aus mindestens einem Diol eines Molekulargewichts von weniger als 250 zurückbleibt, wobei mindestens 70 Mol % der verwendeten Dicarbonsäure aus 2,6-Naphthalindicarbonsäure oder ihrer esterbildenden Äquivalente besteht und mindestens 70 Mol % des Diols mit dem kleinen Molekulargewicht aus 1,4 Butandiol oder dessen esterbildenden Äquivalenten besteht und die Summe der Mol % von der Dicarbonsäure, die keine 2,6-Naphthalindicarbonsäure oder ihrer esterbildenden Äquivalente ist und des Diols mit einem kleinen Molekulargewicht, das kein 1,4-Butandiol oder dessen esterbildende Äquivalente ist, höchstens 30 % beträgt und die Estereinheiten mit kurzen Ketten 35 bis 80 Gew.% des Copolyetheresters betragen.

Vom Vorteil ist es, wenn in einer Ausführungsform des erfindungsgemäßen Laminats, welche eine zwischen Außen- und Innenschicht liegende Schicht - also Zwischenschicht - aus Polymeren auf Cellulosegrundlage enthält, die Außenschicht und/oder die Innenschicht mit einem Hydrophobiermittel getränkt und/oder beschichtet sind. Bei Tränkung (=Imprägnierung) oder Beschichtung der Außenschicht des erfindungsgemäßen Laminats werden die Gewebeporen der Außenschicht nicht verschlossen, sondern sie bleiben atmungsaktiv und wasserdampfdurchlässig. Geeignete Hydrophobiermittel sind Paraffine, Wachse oder Metallseifen, welche Zusätze an Aluminium- bzw. Zirkonium-salzen, quartäre organische Verbindungen, Harnstoff-Derivate, Fettsäure-modifizierteMelaminharze, Chrom-Komplexsalze, Silicone, Zinn-organische Verbindungen, Glutardialdehyd etc. enthalten können.

Als Silikone eignen sich insbesondere nicht modifizierte Methylpolysiloxane oder modifizierte Methylpolysiloxane, wie einfach oder zweifach seitenkettenmodifizierte, endgruppenmodifizierte und/oder seiten- und endgruppenmodifizierte. Durch die Tränkung und/oder Beschichtung wird die Fasergrenzfläche der Außenschicht dergestalt verändert, daß Wassertropfen an der Außenschicht abperlen, ohne das Gewebe der Außenschicht zu benässen oder in dieses einzudringen. Darüber hinaus weist die Tränkung oder Beschichtung der Außenschicht den Vorteil auf, schmutzabweisend zu sein.

In einer weiteren Ausführungsform der Erfindung können auch Zwischenschichten aus verschiedenen Membranen und/oder getränkten bzw. beschichteten Geweben, Vlies, Filz etc. verwendet werden, wobei eine Membran ein Polymer auf Cellulosegrundlage, das nach dem Cuprammoniumverfahren herstellbar ist, und z.B. eine weitere Membran ein nach tert. Aminoxidverfahren erhältliches Polymer oder ein Polymer auf Copolyetherestergrundlage enthalten können.

Die der Außenschicht und/oder Innenschicht zugewandte Zwischenschichten können mit einem Kleber, vorzugsweise einem wasserdampfdurchlässigen und wasserdichten Kleber, mindestens abschnittsweise wie punkt-, gitter-, strich- und /oder streifenförmig verklebt werden. Vorzugsweise kann auch eine Heiß-Verklebung erfolgen. Als Kleber eignen sich herkömmliche Dispersions-, Lösungsmittel-, Schnell- oder Reaktionskleber. Als Dispersionskleber können wäßrige Emulsionen von Kunststoffen, Natur- oder Synthesekautschuk verwendet werden, wie wässerige Dispersionen von organischen Polymeren.

Gerade die Verwendung von Klebern auf Polyurethangrundlage, welche eine geringe Quellfähigkeit aufweisen und eine maximale Laminathaftung und Klebekraft zeigen, ist von Vorteil, wenn das erfindungsgemäße Laminat bei Kontamination mit organischen giftigen Dämpfen, Aerosolen oder Viren einer chemischen oder auch wäßrigen mechanische Waschbehandlung unterzogen werden muß. Als wasserdichte und wasserdampfdurchlässige Kleber eignen sich solche mit Polymeren auf Cellulosegrundlage.

Gleichfalls führt hierbei eine Heißsterilisation bzw. Dampfsterilisation des erfindungsgemäßen Laminats nicht zu einer nennenswerten Formunbeständigkeit der aus dem erfindungsgemäßen Laminat hergestellten Bekleidungsstücke. Eine Funktionseinschränkung wie Deformierung der Bekleidungsstücke, welche den Tragekomfort der Bekleidungsstücke als auch den Schutz gegenüber organischen Dämpfen und Aerosolen beeinträchtigen können, wird im Gegensatz zum Stand der Technik nicht beobachtet.

Auch ist es möglich, Bekleidungsstücke dergestalt herzustellen, das die Zwischenschicht in Form eines Inserts mittels Dippingsverfahrens verwendbar und gegebenenfalls im Rahmen eines Hotmelts-Verfahrens an die Außenschicht fixierbar ist. Dadurch wird erreicht, daß eine umfassende Isolierung des Benutzers mittels des Bekleidungsstücks nach außen gewährleistet ist.

In einer weiteren Ausführungsform kann zusätzlich das erfindungsgemäße Laminat eine temperaturdämmende Isolationsschicht aufweisen, welche auf der der Außenseite zugewandten Seite der Innenschicht als eine wasserdampfdurchlässige, vorzugsweise poröse, temperaturdämmende Isolationsschicht aufdampfbar ist.

Vorteilhafterweise weisen die Außenschicht und/oder die Innenschicht eine Schichtdicke von 80 bis 300 µm, vorzugsweise 150 bis 250 µm, auf. Hierbei beträgt die Schichtdicke der Schicht mit Polymeren auf Cellulosegrundlage 2 bis 20 µm, vorzugsweise 8 µm, und die der Schicht mit Polymeren aus z.B. Copolyetherestern 5 bis 20 µm, vorzugsweise 10 µm; noch vorteilhafter kann die Schicht mit Polymeren auf Cellulosegrundlage eine Schichtdicke von 6,5, 8, 11 oder 16 µm zeigen.

Insbesondere ist es möglich, wenn die Zwischenschicht ein Flächengewicht von 10 bis 200 g/m2, vorzugsweise von 12 bis 15 g/m2, aufweist. In einer Ausgestaltung der Erfindung beträgt die wasserdampfdurchtrittsrate der Zwischenschicht mehr als 600 g/m2 24 std., vorzugsweise 600 bis 900 g/m2 24 std (nach ASTM E 96-93).

Darüber hinaus werden für das erfindungsgemäße Laminat für das Vlies, den Filz und/oder das Gewebe Naturfasern und/oder Chemiefasern verwendet. Als Naturfasern eignen sich Baumwolle, Leinen, Jute, Hanf und/oder Sisal, als Chemiefasern synthetische Fasern und/oder regenerierte und/oder modifizierte Cellulose-Fasern. Die synthetischen Fasern umfassen mindestens einen Vertreter der Polyester-, Polyamid-, Polyacryl-, Polyvinylchloridfasern oder Mischungen derselben umfassenden Gruppe.

Ein weiterer Gegenstand der Erfindung betrifft die Verwendung des erfindungsgemäßen Laminats in wasserdichten, wasserdampfdurchlässigen Bekleidungsstücken und Abdeckungen sowie zur Abtrennung und/oder Rückhalt von giftigen Dämpfen, Aerosolen und biologischen Wirkstoffen in z.B. Stoffaustauschern.

Aufgrund der hervorragenden Eigenschaften des erfindungsgemäßen Laminats kann das Laminat nicht nur als Ausgangsmaterials zu Herstellung von Bekleidungsstücken verwendet werden wie Arbeitskleidung, Arbeitsschutzkleidung, Handschuhen, Arbeitsschuhen, Kopfbedeckung, Verteidigungs-, Kampf- und Trainingsanzügen sondern es eignet sich hervorragend überall dort, wo der Durchtritt von Wasserdampf erwünscht, aber das Eindringen von giftigen organischen Dämpfen und Aerosolen und von flüssigem Wasser unerwünscht ist. Daher ist das erfindungsgemäßen Laminat als Schutzlaminat zur Verwendung in Filtern industrieller Abgase, Schonbezügen, Zeitwänden und als Abdeckungsschutzlaminat von sensitiven technischen Vor- und Einrichtungen zu verwenden.

### Ausführungsbeispiele

Das erfindungsgemäße Laminat wird der Gegenwart von Tetrachlormethandampf und Wasserdampf ausgesetzt unter Anwendung des Prüfverfahrens ASTM E 96-93 (Methode B, modifiziert). Hierbei werden kreisrunde Laminatstücke auf den Rand eines mit Tetrachlormethan oder Wasser gefüllten Behälters angeordnet und der Behälter hermetisch verschlossen. Innerhalb des Behälters befindet sich eine relative Luftfeuchtigkeit von 100%. Augen beträgt die relative Luftfeuchtigkeit 60%. Die Lufttemperatur liegt bei 21°C, die Windgeschwindigkeit beläuft sich auf 2m/s. Die Temperatur der im Behälter befindlichen Flüssigkeit beträgt je nach Versuch entweder 21°C oder 30°C. Der Abstand der Laminatprobe zu der Oberfläche der Flüssigkeit im Behälter beträgt 2,5 cm.

### Versuch A)

Die Schichtdicke der Membran als Sperrschicht des Laminats, welche ein Polymer auf Cellulosegrundlage, das nach dem Cuprammoniumverfahren hergestellt ist, (unter dem Warenzeichen Cuprophan eingetragen) aufweist, beträgt 8 µm und weist eine Ultrafiltrationsrate von 4,2 ml/std. x m2 mmHg auf. Hierbei zeigt sich, daß eine Wasserdampfdurchlässigkeit des erfindungsgemäßen Laminats von 3100 g/m2 24 std. bei einer Wassertemperatur von 30°C erreicht. Bei einer Wassertemperatur von 21°C verringert sich die Wasserdampfdurchlässigkeit auf 600 g/m2 24 std. Darüber hinaus ist bei einer Temperatur von Tetrachlormethan von 21°C keine Durchlässigkeit für Tetrachlormethandampf nachweisbar. Das Laminat hat eine hydrostatische Druckfestigkeit von 41,5 psi nach FTMS 191A, TM 5512. Eine Wiederholungsmessung nach 1 und 2 Monaten zeigt keine signifikante Änderung dieser Meßwerte.

### Versuch B)

Hingegen zeigt als Kontrolle der Vergleich mit einem herkömmlichen Laminat, welches kein Polymer auf Cellulosegrundlage, das nach dem Cuprammoniumverfahren herstellbar ist, sondern lediglich auf Polyestergrundlage enthält (unter dem Warenzeichen Sympatex eingetragen), daß bei einer Wassertemperatur von 30°C die Wasserdampfdurchlässigkeit 2700 g/m2 24 std. und bei einer Wassertemperatur von 21°C die Wasserdampfdurchlässigkeit 750 g/m2 24 std. beträgt. Im Gegensatz zu dem erfindungsgemäßen Laminat, welches eine Membran als Zwischenschicht (unter dem Warenzeichen Cuprophan eingetragen) enthält, findet sich eine Tetrachlormethandampfdurchlässigkeit von 2900 g/m2 24 std.

### Versuch C)

Bei Verwendung von erfindungsgemäßem Laminat, welches zwei Membranen aufweist, die eine Membran mit einer Dicke von 8 µm aus einem Polymer auf Cellulosegrundlage, das nach dem Cuprammoniumverfahren hergestellt ist (unter dem Warenzeichen Cuprophan eingetragen) und eine Ultrafiltrationsrate von 4,2 ml/std. x m2 mmHg zeigt, die weitere Membran als Trennschicht mit einer Dicke 10 µm auf Copolyetherestergrundlage (unter dem Warenzeichen Sympatex eingetragen), daß die Wasserdampfdurchlässigkeit der erfindungsgemäßen Laminatprobe annähernd 600 g/m2 24 std. bei einer Temperatur des Wassers in dem Behälter von 21°C beträgt, wobei bei Erhöhen der Temperatur des Wassers im Behälter sich gleichfalls wie in Versuch a) die Wasserdampfdurchlässigkeit um das 4-fache erhöht. Eine Durchlässigkeit der Probe für Tetrachlormethandampf ist ebenso hierbei nicht feststellbar.

Das Laminat weist eine hydrostatische Druckfestigkeit von 39,6 psi auf, die durch das Ober- und Untergewebe erzielt wird, zwischen denen die beiden Membranen laminiert sind.

### Versuch D)

In einem weiteren Versuch wird eine 8 µm dicke cellulosische Membran ( unter dem Warenzeichen Cuprophan eingetragen), eine 10 µm dicke Membran auf Copolyetherestergrundlage und ein Tricot-Gewebe aus Polyamid 6 laminiert und nachhydrophobiert. Die Wasserdampfdurchlässigkeit beträgt 590 g/m 2 24 std. Die Ultrafiltrationsrate des Laminats mit dem höheren Druck auf der Seite des hydrophobierten Gewebes beträgt Null. Die Wasserdampfdurchlässigkeit liegt bei 2753 g/m 2 24 std. Das Flächengewicht des Laminats beträgt 143,4 g/m 2.

## Patentansprüche

1. Wasserdampfdurchlässiges und flüssigkeitssperrendes Laminat zum Rückhalt von organischen Dämpfen, Aerosolen und biologischen Wirkstoffen mit mindestens drei Schichten, wobei mindestens eine Schicht eine ganzflächig von Polymeren auf Cellulosegrundlage ausgebildete Sperrschicht ist und mindestens die beiden übrigen der mindestens drei Schichten als flüssigkeitsperrende und wasserdampfdurchlässige Trennschichten auf jeder Seite der Sperrschicht angeordnet sind, dadurch gekennzeichnet, daß die Sperrschicht einen Porenfüller aufweist.

2. Laminat nach Anspruch 1, dadurch gekennzeichnet, daß mindestens eine Sperrschicht dadurch herstellbar ist, daß eine das Laminat bildende Schicht mit Polymeren auf Cellulosegrundlage getränkt und/oder beschichtet wird.

3. Laminat nach Anspruch 1 oder 2, dadurch gekennzeichnet, daß die Trennschicht Polymere auf Copolyetherestergrundlage enthält.

4. Laminat nach einem der Ansprüche 1 bis 3, dadurch gekennzeichnet, daß die Sperrschicht eine Ultrafiltrationsrate von gleich oder weniger als 1 ml/std. x m2 mmHg, vorzugsweise weniger als 0,1 ml/std. x m2 mmHg, aufweist.

5. Laminat nach Anspruch 3 oder 4, dadurch gekennzeichnet, daß mindestens eine Trennschicht dadurch herstellbar ist, daß eine das Laminat bildende Schicht mit Polymeren auf Copolyetherestergrundlage getränkt und/oder beschichtet wird.

6. Laminat nach einem der Ansprüche 1 bis 5, dadurch gekennzeichnet, daß die Sperrschicht als Klebeschicht ausgebildet ist.

7. Laminat nach einem der Ansprüche 1 bis 6, dadurch gekennzeichnet, daß die Sperrschicht als Membran ausgebildet ist.

8. Laminat nach einem der Ansprüche 3 bis 7, dadurch gekennzeichnet, daß die Trennschicht als Membran ausgebildet ist.

9. Laminat nach Anspruch 8, dadurch gekennzeichnet, daß mindestens eine Trennschicht eine mikropöröse hydrophobe Membran ist.

10. Laminat nach einem der Ansprüche 1 bis 9, dadurch gekennzeichnet, daß das Laminat eine hydrostatische Druckfestigkeit von gleich oder größer 1,3802 x 105 Pa (20 psi) aufweist.

11. Laminat nach einem der Ansprüche 1 bis 10, dadurch gekennzeichnet, daß die Sperrschicht doppellagig ausgebildet ist.

12. Laminat nach einem der Ansprüche 1 bis 11, dadurch gekennzeichnet, daß mindestens eine Trennschicht eine mit einem wasserdampfdurchlässigen Hydrophobiermittel getränkte und/oder beschichtete Schicht ist.

13. Laminat nach einem der Ansprüche 1 bis 12, dadurch gekennzeichnet, daß die Sperrschicht unter Verwendung von Kupferoxidammoniaklösung, Kupfer-Ethylendiamin-Komplex-Lösung, Xanthogenat-Lösung als Lösungsmittel für Cellulose über Spinn-, Beschichtungs- bzw. Formmassen herstellbar ist.

14. Laminat nach Anspruch 13, dadurch gekennzeichnet, daß Spinn-, Beschichtungs- bzw. Formmassen zur Herstellung der Sperrschicht Polymere auf Cellulosegrundlage umfassen, welche unter Verwendung von tert. Aminoxid-Lösung als Lösungsmittel für Cellulose herstellbar sind.

15. Laminat nach Anspruch 14, dadurch gekennzeichnet, daß Spinn-, Beschichtungs- bzw. Formmassen Polymere auf Cellulosegrundlage umfassen, welche 4,99 - 25 Gew.% Cellulose, 95 - 50 Gew.% eines tertiären Aminoxids, gegebenenfalls bis 25 Gew.% Nichtlösungsmittel und bis zu 10 Gew.% anderen Polymeren jeweils bezogen auf das Gewicht der Form- bzw. Spinnmasse, als Zusatzstoff einzeln oder im Gemisch organische Verbindungen, die wenigstens 4 Kohlenstoffatome und wenigstens zwei konjugierte Doppelbindungen und wenigstens zwei Gruppen in Form von Hydroxyl- und/oder Aminogruppen mit wenigstens einem unsubstituierten Wasserstoffatom besitzen, und/oder Glycerinaldehyd enthalten.

16. Laminat nach einem der Ansprüche 3 bis 15, dadurch gekennzeichnet, daß die Polymere auf Copolyetherestergrundlage Copolyetherester sind, die sich von längerkettigen Polyglykolen, kurzkettigen Glykolen mit 2 bis 4 Kohlenstoffatomen und Dicarbonsäuren ableiten.

17. Laminat nach einem der Ansprüche 1 bis 16, dadurch gekennzeichnet, daß eine oder mehrere Schichten mindestens abschnittsweise miteinander mittels eines Klebers verklebt sind.

18. Laminat nach Anspruch 17, dadurch gekennzeichnet, daß der Kleber wasserdampfdurchlässig und/oder für organische Dämpfe, Aerosole und biologische Wirkstoffe undurchlässig ist.

19. Laminat nach einem der Ansprüche 1 bis 18, dadurch gekennzeichnet, daß die die Schichten miteinander verbindenden Kleber derartig angeordnet sind, daß die Klebstellen übereinander angeordnet sind.

20. Bekleidungsstücke, geeignet als wasserdichter wasserdampfdurchlässiger Schutz vor giftigen Dämpfen, Aerosolen und biologischen Wirkstoffen, dadurch gekennzeichnet, daß die Bekleidungsstücke das Laminat nach einem der Ansprüche 1 bis 19 enthalten.

21. Bekleidungsstücke nach Anspruch 20, dadurch gekennzeichnet, daß die Bekleidungsstücke Arbeitskleidung, Arbeitsschutzkleidung, Militärschutzkleidung, Handschuhe, Arbeitsschuhe, Kopfbedeckung und Trainingsanzüge sind.

## Claims

1. Water-vapour permeable and liquid-blocking laminate for retaining organic vapours, aerosols and biological active substances, with at least three layers, at least one layer being a blocking layer which is formed over its whole surface by polymers based on cellulose and at least the two remaining layers of the at least three layers being arranged as liquid-blocking and water-vapour-permeable separating layers on each side of the blocking layer, characterised in that the blocking layer exhibits a pore filler.

2. Laminate according to Claim 1, characterised in that at least one blocking layer is capable of being produced by a layer which forms the laminate being impregnated and/or coated with polymers based on cellulose.

3. Laminate according to Claim 1 or 2, characterised in that the separating layer contains polymers based on copolyether ester.

4. Laminate according to any one of Claims 1 to 3, characterised in that the blocking layer exhibits an ultrafiltration rate equal to or less than 1 ml/hr x m² mmHg, preferably less than 0.1 ml/hr x m² mmHg.

5. Laminate according to Claim 3 or 4, characterised in that at least one separating layer is capable of being produced by a layer which forms the laminate being impregnated and/or coated with polymers based on copolyether ester.

6. Laminate according to any one of Claims 1 to 5, characterised in that the blocking layer takes the form of an adhesive layer.

7. Laminate according to any one of Claims 1 to 6, characterised in that the blocking layer takes the form of a membrane.

8. Laminate according to any one of Claims 3 to 7, characterised in that the separating layer takes the form of a membrane.

9. Laminate according to Claim 8, characterised in that at least one separating layer is a microporous hydrophobic membrane.

10. Laminate according to any one of Claims 1 to 9, characterised in that the laminate exhibits a hydrostatic compressive strength equal to or greater than 1.3802 x 10⁵ Pa (20 psi).

11. Laminate according to any one of Claims 1 to 10, characterised in that the blocking layer is of two-ply construction.

12. Laminate according to any one of Claims 1 to 11, characterised in that at least one separating layer is a layer which is impregnated and/or coated with a water-vapour-permeable hydrophobing agent.

13. Laminate according to any one of Claims 1 to 12, characterised in that the blocking layer is capable of being produced with the aid of spinning, coating or moulding compositions by using ammoniacal copper-oxide solution, copper-ethylenediamine-complex solution, xanthate solution as solvent for cellulose.

14. Laminate according to Claim 13, characterised in that spinning, coating or moulding compositions for producing the blocking layer comprise polymers based on cellulose which are capable of being produced by using tert. amine-oxide solution as solvent for cellulose.

15. Laminate according to Claim 14, characterised in that spinning, coating or moulding compositions comprise polymers based on cellulose which contain 4.99 - 25 wt.-% cellulose, 95 - 50 wt.-% of a tertiary amine oxide, optionally up to 25 wt.-% non-solvent and up to 10 wt.-% of other polymers, in each case relative to the weight of the moulding or spinning composition, by way of additive, individually or in a mixture, organic compounds which possess at least 4 carbon atoms and at least two conjugated double bonds and at least two groups in the form of hydroxyl and/or amino groups with at least one non-substituted hydrogen atom, and/or glycerin aldehyde.

16. Laminate according to any one of Claims 3 to 15, characterised in that the polymers based on copolyether ester are copolyether esters which are derived from longer-chain polyglycols, short-chain glycols with 2 to 4 carbon atoms and dicarboxylic acids.

17. Laminate according to any one of Claims 1 to 16, characterised in that one or more layers are bonded to one another at least in sections by means of an adhesive.

18. Laminate according to Claim 17, characterised in that the adhesive is water-vapour-permeable and/or impermeable in respect of organic vapours, aerosols and biological active substances.

19. Laminate according to any one of Claims 1 to 18, characterised in that the adhesives connecting the layers to one another are arranged in such a way that the points of adhesion are arranged above one another.

20. Garments which are suitable as watertight, water-vapour-permeable protection against toxic vapours, aerosols and biological active substances, characterised in that the garments contain the laminate according to any one of Claims 1 to 19.

21. Garments according to Claim 20, characterised in that the garments are working clothes, protective working clothes, protective military clothes, gloves, working shoes, headgear and training suits.

## Revendications

1. Stratifié perméable à la vapeur d'eau et arrêtant les liquides, destiné à retenir les vapeurs organiques, les aérosols et les agents biologiques actifs, qui comprend au moins trois couches, au moins une couche étant une couche d'arrêt constituée sur toute sa surface de polymères à base de cellulose et au moins les deux couches restantes des au moins trois couches étant disposées de chaque côté de la couche d'arrêt en tant que couches de séparation perméables à la vapeur d'eau et arrêtant les liquides, stratifié caractérisé en ce que la couche d'arrêt possède une charge poreuse.

2. Stratifié selon la revendication 1, caractérisé en ce qu'au moins une couche d'arrêt est réalisable par imprégnation et/ou revêtement d'une couche formant le stratifié par des polymères à base de cellulose.

3. Stratifié selon la revendication 1 ou 2, caractérisé en ce que la couche de séparation contient des polymères à base de copolyétherester.

4. Stratifié selon l'une quelconque des revendications 1 à 3, caractérisé en ce que la couche d'arrêt présente une perméabilité en ultrafiltration inférieure ou égale à 1 ml/h. m². mmHg, de préférence inférieure à 0,1 ml/h. m². mmHg.

5. Stratifié selon la revendication 3 ou 4, caractérisé en ce que au moins une couche de séparation est réalisable par imprégnation et/ou revêtement d'une couche formant le stratifié par des polymères à base de copolyétherester.

6. Stratifié selon l'une quelconque des revendications 1 à 5, caractérisé en ce que la couche d'arrêt est constituée d'une couche adhésive.

7. Stratifié selon l'une quelconque des revendications 1 à 6, caractérisé en ce que la couche d'arrêt est constituée d'une membrane.

8. Stratifié selon l'une quelconque des revendications 3 à 7, caractérisé en ce que la couche de séparation est constituée d'une membrane.

9. Stratifié selon la revendication 8, caractérisé en ce qu'au moins une couche de séparation est une membrane hydrophobe microporeuse.

10. Stratifié selon l'une quelconque des revendications 1 à 9, caractérisé en ce que le stratifié présente une résistance à la pression hydrostatique supérieure ou égale à 1,3802 x 10⁵ Pa (20 psi).

11. Stratifié selon l'une quelconque des revendications 1 à 10, caractérisé en ce que la couche d'arrêt est à double couche.

12. Stratifié selon l'une quelconque des revendications 1 à 11, caractérisé en ce qu'au moins une couche de séparation est une couche imprégnée et/ou revêtue d'un agent hydrophobe, perméable à la vapeur d'eau.

13. Stratifié selon l'une quelconque des revendications 1 à 12, caractérisé en ce que l'on peut préparer la couche d'arrêt par l'intermédiaire de matières pour filage, pour enduction ou pour moulage, en utilisant une solution ammoniacale d'oxyde de cuivre, une solution de complexe cuivre-éthylènediamine ou une solution de xanthogénate comme solvant pour la cellulose.

14. Stratifié selon la revendication 13, caractérisé en ce que les matières pour filage, pour enduction ou pour moulage pour la préparation de la couche d'arrêt comprennent des polymères à base de cellulose que l'on peut préparer en utilisant une solution d'un oxyde d'amine tertiaire comme solvant pour la cellulose.

15. Stratifié selon la revendication 14, caractérisé en ce que les matières pour filage, enduction ou moulage comprennent des polymères à base de cellulose qui contiennent 4,99 à 25 % en poids de cellulose, 95 à 50 % en poids d'un oxyde d'amine tertiaire, éventuellement jusqu'à 25 % en poids de non-solvant et jusqu'à 10 % en poids d'autres polymères, ces pourcentages étant rapportés à chaque fois au poids de la matière pour moulage ou filage, et, comme additif, isolément ou en mélange, des composés organiques possédant au moins 4 atomes de carbone, au moins deux doubles liaisons conjuguées et au moins deux groupes hydroxyles et/ou amino ayant au moins un atome d'hydrogène non substitué, et/ou de l'aldéhyde glycérique.

16. Stratifié selon l'une quelconque des revendications 3 à 15, caractérisé en ce que les polymères à base de copolyétherester sont des copolyétheresters qui dérivent de polyglycols à longue chaîne, de glycols à chaîne courte ayant 2 à 4 atomes de carbone et d'acides dicarboxyliques.

17. Stratifié selon l'une quelconque des revendications 1 à 16, caractérisé en ce qu'une ou plusieurs couches sont collées ensemble, au moins par endroits, à l'aide d'une colle.

18. Stratifié selon la revendication 17, caractérisé en ce que la colle est perméable à la vapeur d'eau et/ou imperméable aux vapeurs organiques , aux aérosols et aux agents biologiques actifs.

19. Stratifié selon l'une quelconque des revendications 1 à 18, caractérisé en ce que les colles liant les couches ensemble sont disposées de telle manière que les endroits collés sont placés les uns au-dessus des autres.

20. Pièces d'habillement, convenant comme protection imperméable à l'eau et perméable à la vapeur d'eau contre les vapeurs, les aérosols et les agents biologiques actifs toxiques, caractérisées en ce qu'elles contiennent le stratifié selon l'une quelconque des revendications 1 à 19.

21. Pièces d'habillement selon la revendication 20, caractérisées en ce qu'elles sont un habit de travail, un habit de protection pour le travail, un habit militaire de protection, des gants, des chaussures de travail, un couvre-chef ou une tenue de training.
